Europäisches Patentamt

European Patent Office

Office européen des brevets

(11) Veröffentlichungsnummer: **0 267 209**
**B1**

(12) **EUROPÄISCHE PATENTSCHRIFT**

(45) Veröffentlichungstag der Patentschrift: **05.09.90**

(51) Int. Cl.⁵: **F 02 D 19/02**

(21) Anmeldenummer: **87902496.6**

(22) Anmeldetag: **15.04.87**

(86) Internationale Anmeldenummer:
**PCT/EP87/00201**

(87) Internationale Veröffentlichungsnummer:
**WO 87/06302 22.10.87 Gazette 87/23**

(54) **ANORDNUNG FÜR DIE DOSIERUNG VON KRAFTSTOFF SOWIE DOSIERVORRICHTUNG DAFÜR.**

(30) Priorität: **17.04.86 DE 3612994**

(43) Veröffentlichungstag der Anmeldung:
**18.05.88 Patentblatt 88/20**

(45) Bekanntmachung des Hinweises auf die
Patenterteilung:
**05.09.90 Patentblatt 90/36**

(84) Benannte Vertragsstaaten:
**AT BE CH DE FR GB IT LI LU NL SE**

(56) Entgegenhaltungen:
**EP-A-0 064 373**
**EP-A-0 085 310**
**CH-A- 609 789**
**US-A-2 696 714**
**US-A-3 176 709**
**US-A-4 141 326**
**US-A-4 413 607**
**US-A-4 499 885**

**Engine Design and Applications, Band 2, NR. 6,
Juni 1966 (Temple Press Ltd, London, GB),
"Liquid petroleum gas systems for i.c. engines",
Seiten 20-22, siehe Bild 13; Seite 22, linke
Spalte: Mc Clain System**

(73) Patentinhaber: **HITEC-GAS INTERNATIONAL
GMBH
Röntgenstrasse 10
D-4430 Steinfurt (DE)**

(72) Erfinder: **SONNTAG, Bruno
Königstrasse 2
D-4435 Horstmar (DE)**

(74) Vertreter: **Glawe, Delfs, Moll & Partner
Patentanwälte
Postfach 26 01 62 Liebherrstrasse 20
D-8000 München 26 (DE)**

Courier Press, Leamington Spa, England.

**Beschreibung**

Es ist bekannt (US-A 4 141 326, Fig. 2), gasförmigen Kraftstoff für einen leistungsvariablen Verbraucher, z.B. einen Kraftfahrzeugmotor, mittels zweier im Strömungsweg hintereinander angeordneter Ventile zu dosieren, nämlich mittels eines Dosierventils, das von einem Leistungsanforderungssignal etwa proportional der Luftmasse gesteuert (mit offener Steuerkette) wird und einem dem Dosierventil vorgeschalteten Reduzierventil, das von der Abgaszusammensetzung her geregelt (mit geschlossenem Regelkreis) wird. Dies hat den Vorteil, daß die Steuerung des Dosierventils nahezu verzögerungsfrei auf Änderungen des Leistungsanforderungssignals reagieren kann. Sie kann so eingestellt werden, daß die dem Verbrennungsluftstrom zugeführte Kraftstoffmenge dem gewünschten Verhältnis möglichst nahekommt. Der Genauigkeitsmangel, der einer Steuerung prinzipiell anhaftet, wird durch die Regelung des vorgeschalteten Reduzierventils mit einer gewissen Verzögerung ausgeglichen. Wenn beispielsweise sich der Durchflußquerschnitt des Dosierventils infolge Verschmutzung ändert oder ein Steuerungssignal aufgrund schwankender Spannungsversorgung nicht die vorgesehene Höhe besitzt oder wenn das Dosierventil infolge wechselnder Betriebsbedingungen in Bereichen mit verschiedenen Kennlinien arbeitet, kann dies durch die Regelung des Reduzierventils unter dem Einfluß des Lambda-Signals ausgeglichen werden.

Trotz dieser Vorteile ist nicht bekannt geworden, daß eine solche Vorrichtung Eingang in die Praxis gefunden hätte. Dies dürfte darin begründet liegen, daß diese Vorteile in der Praxis nur dann zum Vorschein kommen, wenn bestimmte weitere Bedingungen erfüllt sind, die von der Erfindung erkannt wurden und die kennzeichnenden Merkmale des Anspruchs 1 bilden.

Durch die Anordnung eines Puffervolumens zwischen dem geregelten Reduzierventil und dem gesteuerten Dosierventil ist gewährleistet, daß auch bei rascher Verstellung des Dosierventils die Druckverhältnisse vor dem Dosierventil im wesentlichen gleich sind, obwohl das Reduzierventil aufgrund der prinzipiell verzögert arbeitenden Regelung sich nur verzögert an geänderte Betriebsbedingungen anpaßt. Dabei muß das Puffervolumen, damit diese Voraussetzung erfüllt ist, ein bestimmtes Mindestvolumen aufweisen, das durch die Motorleistung vorgegeben ist. Da ein und dieselbe Dosieranordnung für unterschiedliche Leistungsbereiche geeignet sein sollte, läßt sich diese Voraussetzung nur dann erfüllen, wenn das Puffervolumen jeweils anpaßbar ist. Dem dient das Merkmal, daß es von zwei Gehäuseteilen unterschiedlicher Art begrenzt ist. Das erste Gehäuseteil, das als Mechanikgehäuseteil bezeichnet wird, bleibt in sämtlichen Anwendungsfällen unverändert. Es nimmt das Reduzierventil und dessen Betätigungsmechanismus und ggf. weitere, mit hochwertiger mechanischer Bearbeitung oder Montage oder Funktion verbundene Teile auf, z.B. Treibstoffzuführungsanschluß, Abschaltventil, Leerlaufdüse, Schubabschaltventil, Treibstoffabführungsanschluß. Das andere Gehäuseteil, das als Kammergehäuseteil bezeichnet wird, ist im wesentlichen frei von solchen aufwendigen Bestandteilen und kann daher leicht in unterschiedlichen Größen vorgehalten werden und zur Bildung eines bestimmten, gewünschten Kammervolumens je nach Anwendungsfall ausgetauscht werden.

Zwar ist es bekannt (US-PS 44 99 885, Fig. 8) in einer Treibstoffdosieranordnung zwischen einem Reduzierventil und einem Dosierventil ein Puffervolumen anzuordnen. Dabei ist aber das Reduzierventil nicht geregelt, sonder gesteuert (mit offener Steuerkette), um sich zwei unterschiedlichen Betriebsbedingungen anpassen zu können, nämlich dem Betrieb mit und ohne Turbolader. Dank der Steuerung reagiert das Reduzierventil im wesentlichen verzögerungsfrei auf die Änderung der Betriebsbedingungen. Die eingangs erwähnten Vorteile der erfindungsgemäß vorausgesetzten Kombination eines geregelten Reduzierventils und eines gesteuerten Dosierventils konnten daher bei der bekannten Anordnung nicht erkannt werden. Nach weniger konnte man feststellen, daß diese Vorteile von einer bestimmten Mindestgröße des Puffervolumens abhängig sind. Deshalb kann die bekannte Anordnung die erfindungsgemäße Kombination nicht nahelegen.

Bei einer anderen bekannten Dosieranordnung (US-PS 2 696 714) ist gleichfalls ein Puffervolumen zwischen einem Reduzierventil und einem Dosierventil angeordnet, wobei aber das Reduzierventil eine unveränderliche, auf den Atmosphärendruck abgestimmte Druckeinstellung aufweist.

Bekannt ist schließlich auch die Anordnung einer Kammer zwischen Reduzierventil und Dosierventil, die einerseits von einem aufwendigen Mechanikgehäuseteil und einem weniger aufwendigen Kammergehäuseteil begrenzt ist (Engine Design and Applications, Juni 1966, Seite 21, 22), wobei aber offen bleibt, welchen Aufgaben diese Kammer dient. Wahrscheinlich soll sie unverdampfte Treibstoffteile auffangen und ihnen Gelegenheit geben, zu verdampfen, bevor sie das Dosierventil erreichen. Die Größe der Kammer und eine eventuelle Anpaßbarkeit derselben an unterschiedlichen Leistungsbedarf ist nicht angesprochen.

In denjenigen Anwendungsfällen, in denen das Dosierventil nicht auf rasche Lastwechsel ansprechen muß, wie dies bei stationären Motoren oder Dosiervorrichtungen für Heizzwecke der Fall ist, kann bei dem erfindungsgemäßen Gerät das zweite Ventil durch ein Ventil minderer Qualifikation ersetzt werden, weil die Genauigkeit der Dosierung schon durch das erste Ventil aufgrund der Lambda-Regelung gewährleistet ist.

Es ist aus dem obengenannten Stand der Technik bekannt (US-A 2 696 714; Engine Design and Applications a. a. O.), die Dosiervorrichtung mit einem Kanal zur Aufnahme eines flüssigen Wärmeträgers (Motorkühlwasser) auszurüsten.

Zweckmäßigerweise wird dieser Kanal bei der erfindungsgemäßen Vorrichtung im Mechanikgehäuseteil in solcher Weise vorgesehen, daß auch die Oberfläche des Kammergehäuseteils für die Wärmeübertragung genutzt werden kann, indem eine Wand des Kammergehäuseteils in wärmeleitender Verbindung mit dem Wärmeträgerkanal stehen. Jedoch kann auch der Kammergehäuseteil einen Wärmeträgerkanol enthalten.

Nach einem besonderen Merkmal der Erfindung enthält die Kammer Rippen zur Unterteilung in mehrere durch Öffnungen reduzierter Größe miteinander in Verbindung stehende Pufferräume, bzw. zur Vergrößerung der Wärmeaustauschfläche. Die Ausrüstung einer Kammer in einer Dosiervorrichtung mit Wärmeaustauschrippen ist an sich bekannt (WO 82/02926).

Die großvolumige Ausführung der Kammer vermindert die Gefahr von Schwingungen des Systems, wobei die Aufteilung in mehrere, durch reduzierte Querschnitte miteinander in Verbindung stehende Pufferräume zusätzlich dämpfend wirkt. Dabei müssen nicht alle Pufferräume unmittelbar im Strömungsweg des Gases liegen. Im Gegenteil kann es vorteilhaft sein, wenn in einem nicht im Strömungsweg des Gases liegenden Pufferraum sich ein Gasanteil mit gegenüber dem bewegten Gasstrom angehobener Temperatur sammelt, der bei plötzlicher Öffnung des Dosierventils sich aufgrund der Druckabsenkung und entsprechender Expansion dem Gasstrom beimischt und eine schockartige Abkühlung desselben verhindert.

Die Kammer kann einen Sensor für die Temperatur und/oder den Druck des Gases enthalten. Das Drucksignal wird zur Beeinflussung des Reduzierventils verwendet, wie dies an sich bekannt ist, während das Temperatursignal zur Beeinflussung der Wärmezufuhr und/oder auch zur Beeinflussung des Reduzierventils verwendet wird. Infolge der Anpassbarkeit des Kammervolumens an unterschiedliche Leistungsstufen ist das erfindungsgemäße Gerät innerhalb eines großen Leistungsbereichs verwendbar. Dies wird durch die Ausführung des mechanischen Teils nicht eingeschränkt, weil dieser bei großen Leistungen mit entsprechend hohem Druck des Gases in der Kammer vor dem Dosierventil arbeiten kann, während dieser Druck bei geringen Leistungsstufen entsprechend geringer ist. Diese Einstellung des Gerätes auf unterschiedliche Leistungsstufen kann beispielsweise durch Austausch von den Reduzierdruck bestimmenden Federn oder durch Verstellung von deren Vorspannung erfolgen. Nach einem besonderen Markmal der Erfindung ist für die Verstellung der Eigenschaften des Reduzierventils ein Motor vorgesehen, der die Anspassung an die jeweilige Leistungsstufe unter dem Einfluß der von den jeweiligen Betriebsdaten abhängigen Steuersignale selbsttätig vornimmt. Vorzugsweise ist eine auf den Motor des Reduzierventils einwirkende Steuereinheit vorgesehen, die zur Verarbeitung der Signale, insbesondere eines Lambda-Signals, eingerichtet ist. Sie kann Teil eines zentralen Rechners sein, der auch die Stellsignale für das Dosierventil erzeugt.

Bekannte Dosiervorrichtungen geben das Gas mit Unterdruck an ein besonderes Mischgerät oder an einen für bivalenten Betrieb vorgesehenen Vergaser der Luftleitung ab. Dies hat den Nachteil, daß die Saugleitung während einer beträchtlichen Strecke vor dem Motor mit zündfähigem Gemisch gefüllt ist, so daß bei Rückzündungen beträchtliche Schäden entstehen können. Die Erfindung gestattet demgegenüber die Abgabe des Gases mit konstant bleibenden Überdruck, so daß es dem Luftstrom an einer dem Motor beliebig nahen Stelle und ohne die Notwendigkeit einer Mischvorrichtung zugeführt werden kann.

Die Erfindung wird im folgenden näher unter Bezugnahme auf die Zeichnung erläutert. Darin zeigen:

Fig. 1 ein Schaltschema und

Fig. 2 einen Längsschnitt durch die Dosiervorrichtung

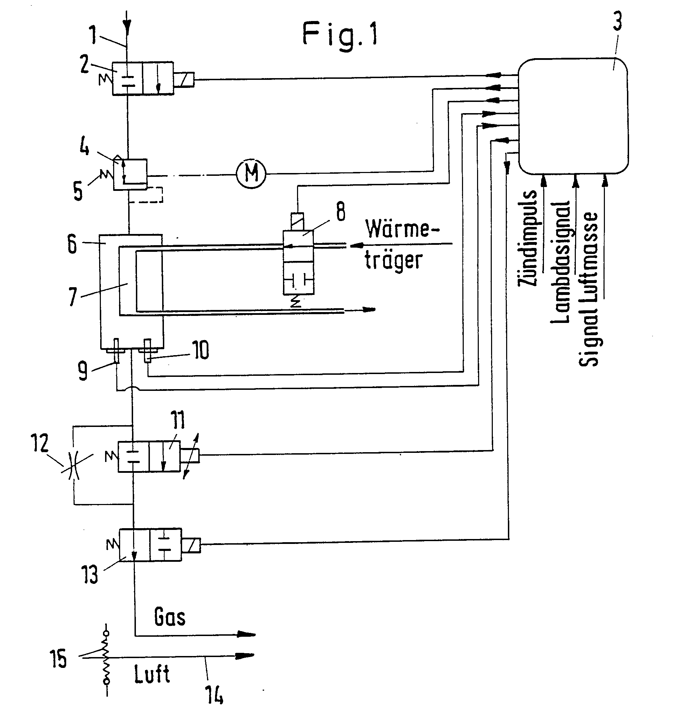

Gemäß Fig. 1 wird das von nicht dargestellter Quelle kommende Flüssiggas durch die Leitung 1 über ein elektromagnetisches Absperrventil 2 geführt, das einen Öffnungsimpuls vom Rechner 3 nur dann erhält, wenn Zündimpulse oder ähnliche Signale dort eingehen. Eine Gefährdung durch ausströmendes Gas bei stehender Anlage ist damit ausgeschlossen.

Das Reduzierventil 4 reduziert den Gasdruck, der zunächst beispielsweise 6 bis 9 Bar betragen kann, auf den gewählten Reduktionsdruck, der im allgemeinen zwischen 0,2 und 0,8 Bar, in Sonderfällen auch darüber und darunter liegen kann. Zur laufenden Einstellung der den Reduktionsdruck bestimmenden Feder ist ein Servomotor M vorgesehen, der seine Steuerimpulse vom Rechner 3 abhängig von bestimmten Betriebsgrößen erhält, insbesondere von dem Reduktionsdruck, dem Lambda-Signal, der Gastemperatur und/oder einem die jeweilige Leistungsanforderung repräsentierenden Signal.

Es folgt die Kammer 6, die einerseits Puffervolumen bildet zur Vermeidung von Pulsationen und andererseits Wärmeaustauschflächen 7 für einen über ein Ventil 8 herangeführten Wärmeträger, beispielsweise Kühlwasser, enthält. Es ist ferner darin ein Temperaturfühler 9 angeordnet, der über den Rechner 3 das Ventil 8 steuert, sowie der oben erwähnte Druckfühler 10, der auf die Steuerung des Servomotors M am Reduzierventil 4 einwirkt. Daran schließt sich das Dosierventil 11 an, das als vom Rechner 3 gesteuertes, elektromagnetisches Proportionalventil ausgebildet ist. Ein Beipaß 12 ist für die Leerlaufeinstellung vorgesehen. Schließlich kann gewünschtenfalls ein elektromagnetisch gesteuertes Ventil 13 für die Schubabschaltung folgen, bevor das Gas dem Luftstrom 14 beigemischt wird, in welchem ein Hitzdrahtinstrument 15 oder ein anderes Meßinstrument für die Luftmassenbestimmung angeordnet ist, dessen Signal ebenso wie weitere mögliche Einflußsignale (beispielsweise das Lambda-Signal) dem Rechner 3 zugeführt wird.

Unterschiedliche Ausbaustufen der Vorrichtung zeichnen sich durch Vorhandensein beziehungsweise Nichtvorhandensein des Servomotors M, der Druck- und Temperaturfühler 9, 10, des Hitzdrahtinstrument 15 und des Schubabschaltungsventil 13 aus. Der Beipaß 12 kann entfallen, wenn das Dosierventil 11 im Leerlauf beispielsweise drehzahlabhängig angesteuert wird.

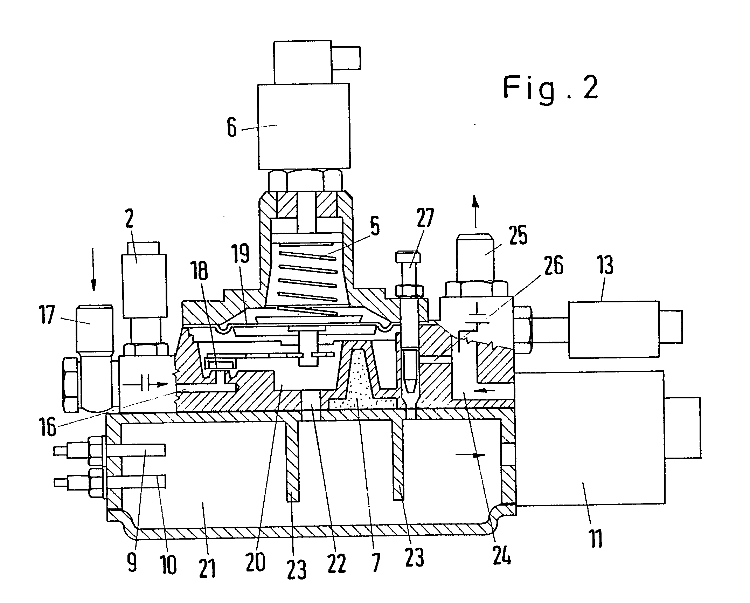

Eine praktische Ausführung dieses Schemas kann vorteilhafterweise die in Fig. 2 ersichtliche Gestalt annehmen.

Der Gaszuführungskanal 16 schließt sich an die Kupplung 17 an, die zur Verbindung mit dem Flüssiggastank vorgesehen ist. Er enthält das Magnetventil 2, das sicherheitshalber erst bei laufender Maschine öffnet. Der Gaszuführungskanal 16 endet bei dem Plattenventil 18, das Teil des Reduzierventils 4 ist. Es handelt sich dabei um ein Membranventil, auf dessen Membran 19 einerseits der Druck in der Ventilkammer 20 und andererseits die Feder 5 wirkt. Diese ist mittels des Servomotors M betrieblich verstellbar. Der Servomotor M kann durch eine Stellschraube ersetzt werden, wenn eine Verstellung während des Betriebs nicht vorgesehen ist. Die Ventilkammer 20 bildet einen Teil der oben erläuterten Kammer, deren größerer Teil 21 mit der Ventilkammer 20 über eine Bohrung 22 verbunden ist. Beide Kammern stehen wärmeleitend in Verbindung mit dem Wärmetauscher 7, der von heißem Kühlwasser durchströmt ist. Der Kühlwasserstrom durch den Wärmetauscher wird bestimmt durch das in dieser Zeichnung nicht erscheinende Ventil 8, das seine Signale über den Rechner 3 von dem in der Kammerwand angeordneten Thermometer 9 erhält. Daneben ist das Druckmeßglied 10 vorgesehen, dessen Signale über den Rechner 3 dem Servomotor M zugehen. Der zweite Teil 21 der Kammer enthält Rippen 23, die mit dem Kühlwasserraum in Verbindung stehen und daher gleichfalls Wärmeaustauscherflächen bilden. Außerdem unterteilen sie — ebenso wie die Bohrung 22 — innerhalb der Gaskammer mehrere Abteilungen, die durch reduzierte Querschnitte miteinander in Verbindung stehen und daher der Bildung von Pulsationen entgegenwirken.

Diejenigen Elemente, die eine aufwendige Gehäusebearbeitung und -form bedingen, sind in dem Gehäuseteil 29 angeordnet, der oben als Mechanikgehäuseteil bezeichnet wurde. Der größere Teil 21 der Kammer liegt in dem Kammergehäuseteil 30, der durch den Deckel 28 geschlossen wird. Der Gehäuseteil 30 hat eine vergleichsweise einfache Form und kann daher mit geringem Aufwand je nach Anforderungen durch einen größeren oder kleineren Gehäuseteil mit mehr oder weniger Rippen bzw. Kammerabteilungen ersetzt werden. Auch kann der freiliegende Deckel 28 ohne Veränderung sonstiger an die Kammerwände angrenzender Teile leicht im Sinne eines größeren oder kleineren Kammervolumens geändert oder ausgetauscht werden.

Der Hauptgasstrom wird sodann dem elektromagnetischen Proportionalventil 11 zugeleitet, von dem aus es über Kanal 24 zum Ausgangsstutzen 25 gelangt. Der Kanal 26 bezeichnet den Beipaß, der mittels Stellschraube 27 zur Leerlaufeinstellung dient. Dem Ausgangsstutzen 25 ist das Schubabschaltungsventil 13 vorgeordnet.

**Patentansprüche**

1. Anordnung für die Dosierung von Kraftstoff, insbesondere Flüssiggas, zu einem leistungsvariablen Verbrennungmotor, die eine Dosiervorrichtung mit einem Reduzierventil (4), einem Dosierventil (11) und einer dazwischen angeordneten Strömungsverbindung (20, 21) sowie Steuermittel (mit offener Steuerkette) für das Dosierventil (11), insbesondere abhängig von einem Leistungsanforderungssignal, bzw. Regelungsmittel (mit geschlossenem Regelkreis) für das Reduzierventil (4) abhängig von Betriebsgrößen umfaßt, dadurch gekennzeichnet, daß die Strömungsverbindung zwischen den beiden Ventilen als Kammer (20, 21) mit einem Puffervolumen zum Ausgleich von Druckschwankungen ausgebildet ist, die teilweise von einem das Reduzierventil (4) und dessen Betätigungsmechanismus aufnehmenden Mechanikgehäuseteil (29) und teilweise von einem daran gesonderten, austauschbaren Kammergehäuseteil (30) begrenzt ist, wobei der Betrag des Volumens der Kammer (20, 21) in cm³ mindestens etwa halb so groß ist wie der Betrag der Leistung des Verbrennungsmotors in kW.

2. Anordnung nach Anspruch 1, dadurch gekennzeichnet, daß der Mechanikgehäuseteil (29) einen Kanal (7) zur Aufnahme eines Wärmeträgers enthält, mit dem die Wond des Kammergehäuseteils in wärmeleitender Verbindung steht.

3. Anordnung nach Anspruch 1 oder 2, dadurch gekennzeichnet, daß die Kammer (21) Rippen (23) enthält zur Unterteilung in mehrere durch Öffnungen reduzierter Größe miteinander in Verbindung stehende Pufferräume bzw. zur Vergrößerung der Wärmeaustauschfläche.

4. Anordnung nach Anspruch 3, dadurch gekennzeichnet, daß wenigstens einer der Pufferräume (20, 21) außerhalb des Strömungswegs des Gases liegt.

5. Anordnung nach einem der Ansprüche 1 bis 4, dadurch gekennzeichnet, daß die Kammer (20, 21) einen Sensor (9, 10) für Temperatur und/oder Druck des Gases enthält, dessen Signal zur Beeinflussung des Reduzierventils (4) bzw. der Wärmezufuhr verwendet ist.

6. Anordnung nach einem der Ansprüche 1 bis 5, dadurch gekennzeichnet, daß ein Motor (M) zur Verstellung der Eigenschaften des Reduzierventils (4) vorgesehen ist.

7. Anordnung nach einem der Ansprüche 1 bis 6, dadurch gekennzeichnet, daß eine auf den Motor (M) des Reduzierventils (4) einwirkende Steuereinheit (3) vorgesehen ist, die zur Verarbeitung der Signale des Druck- bzw. Temperatursensors (9, 10) und/oder weiterer Signale, insbesondere eines Lambda-Signals, eingerichtet ist.

**Revendications**

1. Système de dosage de carburant, en particulier de gaz liquide, pour un moteur à combustion interne à puissance variable, comprenant un dispositif de dosage avec un manodétendeur (4), une valve de dosage (11) et un communication d'écoulement (20, 21) disposée entre ceux-ci, ainsi que des moyens de commande (à commande en boucle ouverte) pour la valve de dosage (11), en particulier sous la dépendance d'un signal de demande de puissance, ou des moyens de réglage (à boucle d'asservissement fermée) pour le manodétendeur (4) sous la dépendance de grandeurs de fonctionnement, caractérisé en ce que la communication d'écoulement entre le manodétendeur et la valve de dosage est réalisée sous forme de chambre (20, 21) à volume tampon pour la compensation d'oscillations de pression, chambre qui est limitée en partie par un élément de boîtier de mécanique (29), qui loge le manodétendeur (4) et son mécanisme d'actionnement, et en partie par un élément d'enveloppe de chambre (30), qui en est séparé et qui est remplaçable, la valeur du volume de la chambre (20, 21) en cm³ étant au moins égale à la moitié environ de la valeur de la puissance du moteur à combustion interne en kW.

2. Système selon la revendication 1, caractérisé en ce que l'élément de boîtier de mécanique (29) contient un passage (7) destiné à recevoir un caloporteur avec lequel la paroi de l'élément d'enveloppe de chambre est en relation de conduction de chaleur.

3. Système selon la revendication 1 ou 2, caractérisé en ce que la chambre (21) contient des nervures (23) pour sa subdivision en plusieurs espaces tampons, qui sont en communication mutuelle par des ouvertures de grandeur réduite, ou pour l'augmentation de la surface d'échange de chaleur.

4. Système selon la revendication 3, caractérisé en ce que l'un au moins des espaces tampons (20, 21) est situé en dehors du trajet d'écoulement du gaz.

5. Système selon l'une quelconque des revendications 1 à 4, caractérisé en ce que la chambre (20, 21) contient un détecteur (9, 10) pour la température et/ou la pression du gaz, détecteur dont le signal est utilisé pour influencer le manodétendeur (4) ou l'adduction de chaleur.

6. Système selon l'une quelconque des revendications 1 à 5, caractérisé en ce qu'un moteur (M) est prévu pour le réglage des caractéristiques du manodétendeur (4).

7. Système selon l'une quelconque des revendications 1 à 6, caractérisé en ce qu'il est prévu une unité de commande (3), qui agit sur le moteur (M) du manodétendeur (4) et qui est agencée pour le traitement des signaux du détecteur de pression ou de température (9, 10) et/ou d'autres signaux, en particulier d'un signal lambda.

**Claims**

1. An assembly for metering fuel, in particular liquefied gas, to a consuming engine of variable output, which assembly comprises a metering device with a reducing valve (4), a metering valve (11) and a flow connection (20, 21) disposed therebetween, and also control means (with an open-loop control) for the metering valve (11), in particular responsive to an output demand signal, and/or control means (with a closed-loop control) for the reducing valve (4) responsive to operating variables, characterised in that the flow connection between the two valves is in the form of a chamber (20, 21) with a buffer volume for equalising pressure fluctuations, which chamber is bounded partly by a mechanical housing part (29) accommodating the reducing valve (4) and its actuating mechanism and partly by an interchangeable chamber housing part (30) separate from the other part, wherein the volume of the chamber (20, 21) in cm³ is at least half as great as the output of the internal combustion engine in kW.

2. An assembly according to Claim 1, characterised in that the mechanical housing part (29) includes a passage for receiving a heat-transfer medium, with which the wall of the chamber housing part is in heat-conducting communication.

3. An assembly according to Claim 1 or 2, characterised in that the chamber (21) comprises ribs (23) for dividing it into a plurality buffer chambers, which are in communication with one another through openings of reduced size, and/or for increasing the heat-exchange surface.

4. An assembly according to Claim 3, characterised in that at least one of the buffer chambers (20, 21) is situated outside the gas flow path.

5. An assembly according to any one of Claims 1 to 4, characterised in that the chamber (20, 21) comprises a sensor (9, 10) for gas temperature and/or pressure, the signal of which is used to control the reducing valve (4) and/or heat supply.

6. An assembly according to any one of Claims 1 to 5, characterised in that a motor (M) is provided for adjusting the characteristics of the reducing valve (4).

7. An assembly according to any one of Claims 1 to 6, characterised in that a control unit (3) acting on the motor (M) of the reducing valve (4) is provided, which control unit is set up to process the signals of the pressure and/or temperature sensor (9, 10) and /or additional signals, in particular a lambda signal.

# Fig.1

Fig. 2